# EUROPÄISCHE PATENTANMELDUNG

(11) **EP 1 731 981 A2**
(43) Veröffentlichungstag der Anmeldung: **13.12.2006**
(21) Anmeldenummer: 06010446.0
(22) Anmeldetag: 20.05.2006
(51) Int. Cl.: G05B 23/02

(54) **Datenverarbeitungssystem und Verfahren zur Regelung einer Anlage**

(30) Priorität: 02.06.2005 DE 102005025282
(71) Anmelder: Bayer MaterialScience AG, 51368 Leverkusen (DE)
(72) Erfinder: Kirsch, Jürgen, Dr., 51375 Leverkusen (DE); Steffens, Friedhelm, 51373 Leverkusen (DE)

(57) **Zusammenfassung**

Die Erfindung betrifft ein Datenverarbeitungssystem mit
- einer Anlagensteuerung (102) für eine Anlage (104), wobei die Anlagensteuerung zur Erfassung von Prozessgrößen (122) ausgebildet ist,
- einem Anlagenmodell (136) zur Berechnung von simulierten Prozessgrößen (124) unter Verwendung eines Teils der erfassten Prozessgrößen,
- einer Benutzer-Schnittstelle (116, 118) zur Ausgabe der erfassten Prozessgrößen und der simulierten Prozessgrößen.

## Beschreibung

Die Erfindung betrifft ein Datenverarbeitungssystem, ein Verfahren zur Überwachung einer Anlage und ein Verfahren zur Regelung einer Anlage sowie entsprechende Computerprogrammprodukte.

Aus dem Stand der Technik sind verschiedene Simulationsverfahren zur Projektierung von Anlagen bekannt. Mit Hilfe solcher Simulationsverfahren wird der Entwurf einer Anlage simuliert, um den Entwurf zu validieren. Ferner kann aufgrund des Simulationsergebnisses die Konfiguration der Anlage im Entwurfsstadium verändert werden, um die Anlage zu optimieren. Aus der US 2001/0021900A1 ist ferner die Verwendung eines Anlagenmodells, das heißt einer so genannten Model Predictive Control, für die Steuerung einer Anlage bekannt geworden.

Der Erfindung liegt dem gegenüber die Aufgabe zu Grunde, ein verbessertes Datenverarbeitungssystem, ein Verfahren zur Überwachung einer Anlage, ein Verfahren zur Regelung einer Anlage sowie entsprechende Computerprögrammprodukte zu schaffen. Insbesondere liegt der Erfindung die Aufgabe zu Grunde, eine neue Verwendung für ein Anlagenmodell zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Das erfindungsgemäße Datenverarbeitungssystem hat eine Anlagensteuerung für eine Anlage, wobei die Anlagensteuerung zur Erfassung von Prozessgrößen ausgebildet ist. Ein Anlagenmodell dient zur Berechnung von simulierten Prozessgrößen aus einem Teil der erfassten Prozessgrößen. Über eine Benutzer-Schnittstelle können die erfassten Prozessgrößen und die simulierten Prozessgrößen ausgegeben werden.

Dies hat den Vorteil, dass Diskrepanzen zwischen erfassten Prozessgrößen und simulierten Prozessgrößen von dem Bedienpersonal der Anlagensteuerung leicht erfasst werden können. Wenn beispielsweise eine simulierte Prozessgröße von einer erfassten Prozessgröße stark abweicht, so deutet dies darauf hin, dass ein Defekt hinsichtlich der Erfassung der betreffenden Prozessgröße vorliegt. Beispielsweise kann die Diskrepanz zwischen der erfassten Prozessgröße und der simulierten Prozessgröße durch einen defekten Sensor begründet sein. Wenn über die Benutzer-Schnittstelle stark divergierende erfasste und simulierte Prozessgrößen ausgegeben werden, so kann dies von dem Bedienpersonal als Hinweis gewertet werden, den oder die betreffenden Sensoren oder Messgeräte, die zur Erfassung der Prozessgrößen dienen, zu überprüfen.

Vorzugsweise werden als Eingangsgrößen für das Anlagenmodell zur Berechnung der simulierten Prozessgrößen nur relativ wenige erfasste Prozessgrößen verwendet, und zwar insbesondere solche erfassten Prozessgrößen, die mit höchster Wahrscheinlichkeit korrekt sind. Bei diesen Prozessgrößen handelt es sich insbesondere um grundlegende Betriebsparameter der Anlage, wie zum Beispiel die aktuell zugeführte Menge von Betriebsstoffen und Energie. Aus solchen grundlegenden Prozessgrößen berechnet das Anlagenmodell simulierte Prozessgrößen, die mit den erfassten Prozessgrößen verglichen werden können.

Nach einer Ausführungsform der Erfindung werden die erfassten Prozessgrößen in einer Datenbank gespeichert. Die Prozessgrößen können aus der Datenbank von einem Computer abgefragt werden. Die Abfrage der Prozessgrößen aus der Datenbank kann entweder aufgrund eines entsprechenden Benutzerkommandos erfolgen oder innerhalb vorprogrammierter Zeitabstände, wie zum Beispiel alle 20 Minuten. Der Computer simuliert die Prozessgrößen mit dem Anlagenmodell unter Verwendung der aus der Datenbank abgefragten Prozessgrößen. Zur Abfrage der erfassten Prozessgrößen aus der Datenbank ist der Computer mit der Datenbank vernetzt.

Nach einer Ausführungsform der Erfindung werden die von dem Computer aus der Datenbank abgefragten erfassten Prozessgrößen lokal gespeichert. Über eine weitere Benutzer-Schnittstelle kann auf die erfassten Prozessgrößen zugegriffen werden, um diese zu verändern. Durch eine nachfolgende Simulation kann festgestellt werden, ob die Veränderung der Prozessgrößen zu einer Verbesserung des Herstellprozesses führen, insbesondere zu einer Kostenreduktion.

Nach einer weiteren Ausführungsform der Erfindung hat der Computer einen Optimierer zur Optimierung der Prozessgrößen. Hierzu verändert der Optimierer ein oder mehrere der erfassten oder simulierten Prozessgrößen. Nach der Veränderung der Prozessgrößen durch den Optimierer wird eine Simulation durchgeführt. Ein Kriterium für die Optimierung können insbesondere die Menge an zuzuführenden Betriebsstoffen wie Edukten, Lösungsmitteln, Katalysatoren, etc., die Menge an zuzuführender Energie oder die Herstellkosten sein. Vorzugsweise werden Kostenparameter―aus einer Datenbank abgefragt, um die Optimierung durchzuführen. Die Kostenparameter können entweder manuell in die Datenbank eingegeben werden. Alternativ können die Kostenparameter auch aus einem so genannten Enterprise Resource Planning System (ERP) ausgelesen werden.

Nach einer Ausführungsform der Erfindung erzeugt der Computer eine Datei mit den durch die Simulation gewonnenen optimierten Prozessgrößen. Die Datei wird von dem Computer über ein Netzwerk zu der Anlagensteuerung übertragen.

Ein solches Prozessleitsystem kann für eine Vielzahl von Prozessen eingesetzt werden, so beispielsweise für die Herstellung von Polymeren, bevorzugt die Herstellung von Synthesekautschuken, wie z.B. EPDM (Ethylenpropylendienkautschuk), CR (Polychloroprenkautschuk), NBR (Nitrilbutadienkautschuk), HNBR (Hydrierter Nitrilbutadienkautschuk), SBR (Styrolbutadienkautschuk), BR (Polybutadienkautschuk), EVM (Ethylenvinylacetatkautschuk) oder auch IIR (Butylkautschuk).

Besonders vorteilhafterweise kann die vorliegende Erfindung für die Herstellung von Isocyanaten, insbesondere TDI, verwendet werden. Zur Herstellung von TDI wird Toluylendiamin (TDA) in Phosgen gelöst. Als Lösungsmittel wird beispielsweise Orthodichlorbenzol (ODB) verwendet. Die chemische Reaktion zur Herstellung des TDI kann in einer oder mehreren Teilreaktionen, und zwar in ein oder mehreren Reaktoren stattfinden.

Nach der Reaktion des TDA mit dem Phosgen fällt neben dem TDA Salzsäuregas mit Phosgen sowie Lösungsmittel mit TDI an. Das TDI wird durch Destillation aus dem Salzsäuregas abgetrennt. Danach folgt eine Abkühlung des Salzsäuregases auf zum Beispiel -15°C, um durch Kondensation das Phosgen und das Lösungsmittel zurückzugewinnen. Das Phosgen und das Lösungsmittel können so in den Prozess rezikliert werden.

Üblicherweise wird die Herstellung von TDI so geregelt, dass die Ausbeute möglichst groß ist. Als Ausbeute wird dabei der Anteil der TDA-Moleküle bezeichnet, welcher bei der Reaktion in TDI-Moleküle umgewandelt wird. Nachteilig ist dabei jedoch, dass eine hohe Ausbeute einen hohen Lösungsmittelanteil erforderlich macht, was zu relativ hohen Energie- und Materialkosten führen kann. Dem gegenüber ermöglicht die vorliegende Erfindung eine Steuerung der Herstellung von TDI zur Optimierung der bereitzustellenden Mengen an Betriebsstoffen und Energie und damit der Herstellungskosten.

Im weiteren werden bevorzugte Ausführungsformen der Erfindung mit Bezugnahme auf die Zeichnungen näher erläutert. Es zeigen:
- Figur 1: ein Blockdiagramm einer bevorzugten Ausführungsform eines erfindungsgemäßen Datenverarbeitungssystems,
- Figur 2: ein Flussdiagramm einer bevorzugten Ausführungsform eines erfindungsgemäßen Überwachungsverfahrens,
- Figur 3: ein Flussdiagramm einer bevorzugten Ausführungsform eines erfindungsgemäßen Regelungsverfahrens.

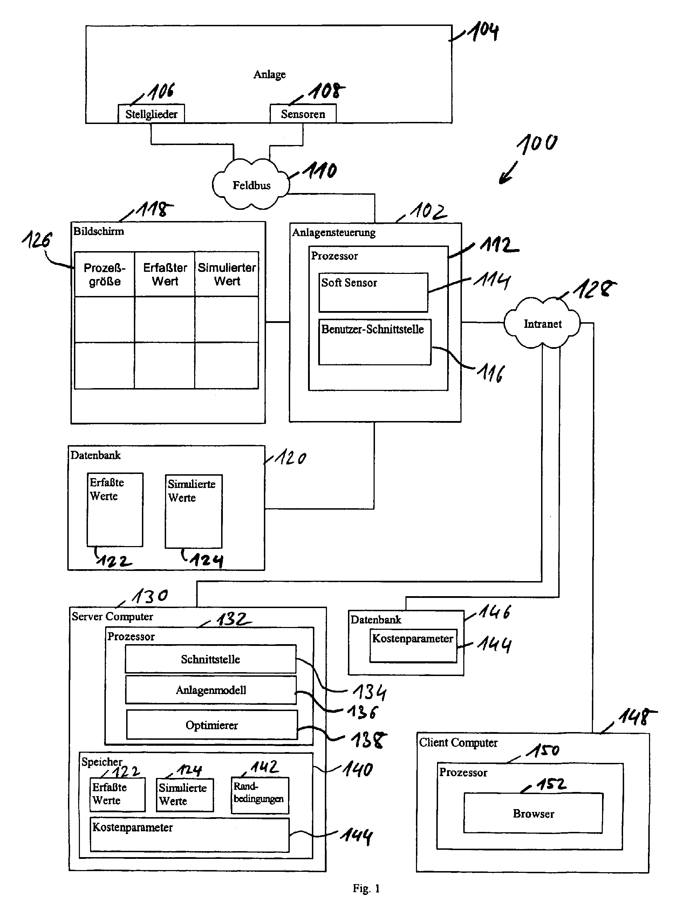

Die Figur 1 zeigt ein Blockdiagramm eines Datenverarbeitungssystems 100. Das Datenverarbeitungssystem 100 hat eine Anlagensteuerung 102 zur Steuerung und/oder Regelung einer Anlage 104. Bei der Anlagensteuerung 102 handelt es sich beispielsweise um ein so genanntes Prozessleitsystem, welches durch ein oder mehrere speicherprogrammierbare Steuerungen (SPS) realisiert werden kann.

Bei der Anlage 104 handelt es sich beispielsweise um eine chemische Fabrikationsanlage zur Herstellung eines Stoffes unter Zuführung von Betriebsstoffen und Energie. Beispielsweise dient die Anlage 104 zur Herstellung von TDI aus TDA, welches in Phosgen gelöst wird. Als Lösungsmittel wird vorzugsweise ODB verwendet.

Die Anlage 104 hat Stellglieder 106, beispielsweise um die zugeführte Menge von Betriebsstoffen und Energie einzustellen, sowie Sensoren 108 zur Messung von Prozessgrößen der Anlage, wie zum Beispiel von Drücken, Temperaturen und Konzentrationen.

Die Stellglieder 106 und die Sensoren 108 sind beispielsweise über einen Feldbus 110 mit der Anlagensteuerung 102 verbunden. Die Anlagensteuerung 102 hat zumindest einen Prozessor 112 für die Steuerung und / oder Regelung der Anlage 104. Der Prozessor 112 dient zur Ausführung eines Programmmoduls 114 und eines Programmmoduls 116. Durch das Programmmodul 114 wird ein so genannter Soft Sensor zur Verfügung gestellt. Das Programmmodul 114 dient also zur Berechnung einer aktuellen Prozessgröße aus ein oder mehreren zum Beispiel von den Sensoren 108 gemessenen Prozessgrößen.

Durch das Programmmodul 116 wird eine Benutzer-Schnittstelle bereitgestellt. Beispielsweise hat die Anlagensteuerung 102 eine Bedienkonsole mit einem Bildschirm 118 und ein oder mehreren Eingabeelementen, wie zum Beispiel eine Tastatur, Computermaus und / oder einen Touch-Screen. Über die von dem Programmmodul 116 zur Verfügung gestellte Benutzer-Schnittstelle, kann das Bedienpersonal der Anlagensteuerung 102 lesend oder schreibend auf Prozessgrößen zugreifen.

Die Anlagensteuerung 102 ist mit einer Datenbank 120 verbunden. Die Datenbank 120 dient zur Speicherung von durch die Anlagensteuerung 102 erfassten bzw. berechneten Prozessgrößen 122 sowie auch zur Speicherung von durch Simulation erhaltenen Prozessgrößen 124. Die Datenbank 120 kann ein integraler Bestandteil der Anlagensteuerung 102 sein. Alternativ kann die Datenbank 120 auf einer separaten Hardware-Komponente realisiert sein, die entweder unmittelbar an die Anlagensteuerung 102 angeschlossen ist, wie in dem Ausführungsbeispiel der Figur 1, oder über ein Netzwerk.

Die von dem Programmmodul 116 zur Verfügung gestellte Benutzer-Schnittstelle dient beispielsweise zur Erzeugung eines Anzeigefensters mit einer Tabelle 126, die die erfassten und die simulierten Werte verschiedener Prozessgrößen anzeigt. Die erfassten und die simulierten Werte der Prozessgrößen werden durch das Programmmodul 116 aus der Datenbank 120 ausgelesen, um die Tabelle 126 zu generieren.

Die Anlagensteuerung ist über ein Netzwerk 128, wie zum Beispiel ein Intranet, mit einem Server-Computer 130 verbunden. Der Server-Computer 130 hat zumindest einen Prozessor 132. Der Prozessor 132 dient zur Ausführung der Programmmodule 134, 136 und 138. Das Programmmodul 134 bildet eine Schnittstelle des Server-Computers 130 zur Abfrage der erfassten Prozessgrößen 122 von der Anlagensteuerung 102 bzw. deren Datenbank 120 über das Netzwerk 128. Bei dem Programmmodul 136 handelt es sich um ein Anlagenmodell der Anlage 104. Mit Hilfe des Programmmoduls 136 können aus einigen grundlegenden Prozessgrößen der Anlage, wie zum Beispiel der gegenwärtig zugeführten Menge von Betriebsstoffen und Energie, simulierte Prözessgrößen berechnet werden.

Bei dem Programmmodul 138 handelt es sich um einen Optimierer zur Optimierung der Prozessgrößen der Anlage. Ein Ergebnis der Optimierung kann beispielsweise eine Vergrößerung oder Verringerung der Menge des eingesetzten Lösungsmittels sein, um dadurch die variablen Herstellkosten zu minimieren.

Der Server-Computer 130 hat einen Speicher 140 zur Speicherung der von der Datenbank 120 abgerufenen erfassten Prozessgrößen 122 sowie der durch das Programmmodul 136 berechneten simulierten Prozessgrößen 124. Ferner dient der Speicher 140 zur Speicherung von Randbedingungen 142 für das Programmmodul 138. Bei den Randbedingungen 142 kann es sich beispielsweise um Randbedingungen für den Betrieb der Anlage 104, wie zum Beispiel technisch bedingte Höchst- oder Mindestgrenzen, oder um einzuhaltenden Qualitätsstandards handeln.

Ferner dient der Speicher 140 zur Speicherung von Kostenparametern 144. Bei den Kostenparametern 144 handelt es sich beispielsweise um die Kosten der eingesetzten Betriebsstoffe und Energiekosten. Die Kostenparameter 144 können in dem Speicher 140 ständig lokal gespeichert und gepflegt werden. Alternativ werden die Kostenparameter in einer Datenbank 146 gespeichert, auf die der Server-Computer 130 über das Netzwerk 128 zugreifen kann. Die Datenbank 146 kann zu einem so genannten ERP-System gehören, beispielsweise ein SAP R/3-System.

Das Datenverarbeitungssystem 100 hat ferner einen Client-Computer 148 mit zumindest einem Prozessor 150 zur Ausführung eines so genannten Browser-Programms 152. Von dem Client-Computer 148 kann über das Netzwerk 128 ein Zugriff auf den Server-Computer 130 erfolgen, um die in dem Speicher 140 abgelegten erfassten Prozessgrößen 122 und/oder die simulierten Prozessgrößen 124 mit Hilfe des Browser-Programms 152 anzuzeigen oder Veränderung von einem oder mehreren dieser Werte einzugeben.

Im Betrieb erfasst die Anlagensteuerung 102 fortlaufend Prozessgrößen von den Sensoren 108 und von dem durch das Programmmodul 114 zur Verfügung gestellten Soft Sensor. Die von der Anlagensteuerung 102 erfassten Prozessgrößen 122 werden in der Datenbank 120 gespeichert. Der Server-Computer 130 greift mit Hilfe seines Programmmoduls 134 über das Netzwerk 128 auf die Datenbank 120 zu, um die erfassten Prozessgrößen 122 auszulesen. Dies kann entweder aufgrund einer manuellen Eingabeanforderung eines Benutzers erfolgen oder innerhalb vorprogrammierter Zeitintervalle, wie zum Beispiel alle 20 Minuten. Dabei ist es ausreichend, wenn nur ein Teil der erfassten Prozessgrößen 122 zu dem Server-Computer 130 übertragen wird. Insbesondere sind solche erfassten Prozessgrößen 122 von Interesse, welche grundlegende Betriebsparameter der Anlage 104 betreffen, wie zum Beispiel die pro Zeiteinheit zugeführte Menge von Betriebsstoffen und Energie.

Die erfassten Prozessgrößen 122 bzw. ein Teil dieser erfassten Prozessgrößen 122 wird in dem Speicher 140 des Server-Computers 130 gespeichert. Daraufhin wird das Programmmodul 136 gestartet, um die simulierten Prozessgrößen 124 mit Hilfe des Anlagenmodells zu berechnen. Die simulierten Werte 124 werden in dem Speicher 140 gespeichert. Bei den simulierten Werten 124 handelt es sich vorzugsweise um sämtliche durch die Simulation mit Hilfe des Anlagenmodells berechneten Werte.

In einem Anwendungsfall werden die simulierten Prozessgrößen 124 von dem Server-Computer 130 über das Netzwerk 128 zu der Anlagensteuerung 102 übertragen, welche die simulierten Prozessgrößen 124 in der Datenbank 120 speichert. Durch das Programmmodul 116 wird dann die Tabelle 126 generiert, indem die erfassten Prozessgrößen 122 und die simulierten Prozessgrößen 124 aus der Datenbank 120 gelesen werden. Dies ermöglicht es dem Bedienpersonal der Anlagensteuerung 102 mit einem Blick und intuitiv zu erfassen, ob es wesentliche Diskrepanzen zwischen einem erfassten Wert und einem simulierten Wert gibt. Falls ein erfasster Wert deutlich von einem simulierten Wert abweicht, so deutet das darauf hin, dass zum Beispiel einer der Sensoren 108 defekt ist. Der oder die betreffenden Sensoren 108 können dann überprüft werden, um den Fehler zu beheben.

In einem anderen Anwendungsfall wird nach der Berechnung der simulierten Prozessgrößen 124 und deren Speicherung in dem Speicher 140 das Programmmodul 138 gestartet, um die Prozessgrößen zu optimieren. Hierzu greift das Programmmodul 138 auf die Randbedingungen 142 und die Kostenparameter 144 zu. Das Programmmodul 138 variiert die simulierten Prozessgrößen 124. Die variierten Prozessgrößen werden in das Programmmodul 136 eingegeben, um mit Hilfe des Anlagenmodells neue simulierte Werte 124 zu berechnen. Insbesondere beinhalten die simulierten Werte 124 die Herstellkosten, zum Beispiel die Herstellkosten pro Tonne.

Nachdem das Programmmodul 138 eine Abbruchbedingung erreicht hat, wie zum Beispiel eine vorgegebene maximale Anzahl von Optimierungsschritten, werden die simulierten Prozessgrößen 124, die Ergebnis der Optimierung sind, als Datei an die Anlagensteuerung 102 übertragen. Die optimierten Prozessgrößen können auf dem Bildschirm 118 durch das Programmmodul 116 dargestellt werden, so dass das Bedienpersonal der Anlagensteuerung 102 die optimierten Prozessgrößen übernehmen kann. Beispielsweise ist zur Umstellung auf die optimierten Prozessgrößen die Eingabe einer Bestätigung durch das Bedienpersonal erforderlich, so dass im weiteren die Anlagensteuerung 102 auf der Grundlage der optimierten Prozessgrößen betrieben wird.

Ferner ist es auch möglich, die erfassten Prozessgrößen 122 und/oder die simulierten Prozessgrößen 124, die in dem Speicher 140 gespeichert sind, über das Netzwerk 128 zu dem Client-Computer 148 zu übertragen, um sie mit Hilfe des Browser-Programms 152 anzuzeigen. Der Benutzer des Client-Computers 148 kann einen oder mehrere der erfassten oder simulierten Werte verändern, um auf dieser Grundlage das Programmmodul 136 zur Durchführung einer Simulation zu starten. Wenn das Ergebnis der Simulation vorteilhaft ist, kann der Benutzer ein Kommando in das Browser-Programm 152 eingeben, so dass die entsprechenden optimierten Prozessgrößen von dem Server-Computer 130 an die Anlagensteuerung 102 übertragen werden.

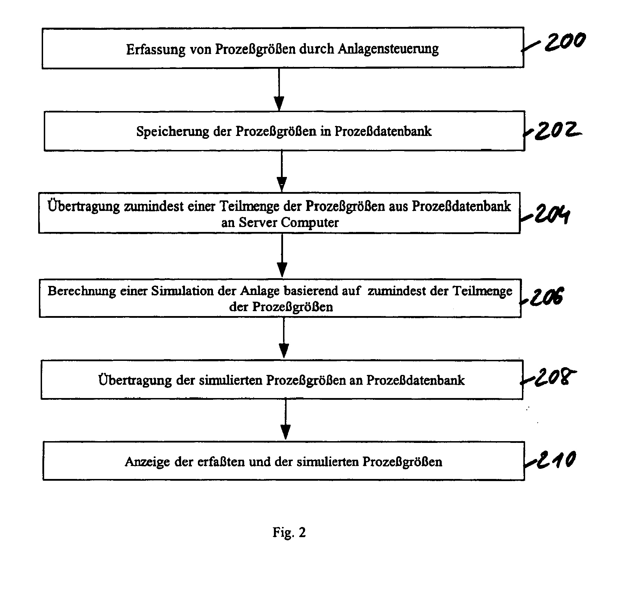

Die Figur 2 zeigt ein entsprechendes Flussdiagramm. In dem Schritt 200 erfasst die Anlagensteuerung Prozessgrößen aus dem laufenden Betrieb der Anlage. Diese erfassten Prozessgrößen werden in dem Schritt 202 in einer Prozessdatenbank (vgl. Datenbank 120 der Figur 1) gespeichert. In dem Schritt 204 wird zumindest eine Teilmenge der erfassten Prozessgrößen aus der Prozessdatenbank an einen Server-Computer übertragen. Auf dieser Grundlage berechnet der Server-Computer eine Simulation der Anlage (Schritt 206). Die durch die Simulation erhaltenen simulierten Prozessgrößen werden von dem Server-Computer in dem Schritt 208 an die Prozessdatenbank übertragen.

In dem Schritt 210 werden sowohl die erfassten als auch die simulierten Prozessgrößen ausgegeben, das heißt zum Beispiel auf einem Bildschirm angezeigt. Bei Diskrepanzen zwischen den erfassten und simulierten Prozessgrößen kann das Bedienpersonal eingreifen, um einen möglichen Fehler zu identifizieren bzw. zu beheben.

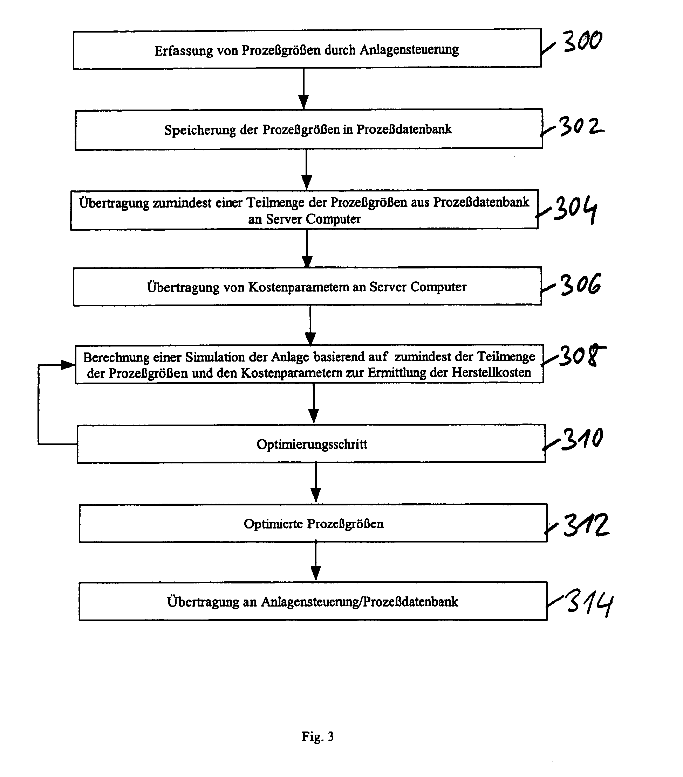

Die Figur 3 zeigt ein Flussdiagramm zur Optimierung der Herstellkosten.

Die Schritte 300, 302 und 304 entsprechen den Schritten 200, 202 und 204 der Figur 2. In dem Schritt 306 erfolgt zusätzlich die Übertragung von Kostenparametern an den Server-Computer. Auf der Grundlage der maßgeblichen Prozessgrößen und der Kostenparameter wird eine Simulation mit Hilfe des Anlagenmodells durchgeführt (Schritt 308). Neben den simulierten Prozessgrößen wie beispielsweise die Mengen an bereitzustellenden Betriebsmitteln und Energie sind die Herstellkosten ein Ergebnis der Simulation. In dem Schritt 310 wird auf der Basis der simulierten Prozessgrößen und der Randbedingungen ein Optimierungsschritt durchgeführt, in dem die simulierten Prozessgrößen variiert werden,

Daraufhin wird in dem Schritt 308 erneut eine Simulation auf der Basis der maßgeblichen variierten Prozessgrößen durchgeführt, insbesondere, um die neuen Herstellungskosten zu berechnen. Danach können ein oder mehrere weitere Optimierungsschritte 310 und nachfolgende Simulationen 308 durchgeführt werden, bis eine Abbruchbedingung erreicht ist. Hierbei kann es sich beispielsweise um eine maximale Anzahl von Iterationen oder ein anderes Abbruchkriterium handeln.

In dem Schritt 312 werden die optimierten Prozessgrößen ausgegeben. Die optimierten Prozessgrößen werden in dem Schritt 314 an die Anlagensteuerung bzw. deren Prozessdatenbank übertragen. Die optimierten Prozessgrößen können automatisch die bisherigen Prozessgrößen ersetzen. Vorzugsweise bedarf es hierzu jedoch einer ausdrücklichen Bestätigung durch das Bedienpersonal der Anlagensteuerung.

### Bezugszeichenliste

- 100: Datenverarbeitungssystem
- 102: Anlagensteuerung
- 104: Anlage
- 106: Stellglieder
- 108: Sensor
- 110: Feldbus
- 112: Prozessor
- 114: Programmmodul
- 116: Programmmodul
- 118: Bildschirm
- 120: Datenbank
- 122: erfasste Prozessgröße
- 124: simulierte Prozessgröße
- 126: Tabelle
- 128: Netzwerk
- 130: Server-Computer
- 132: Prozessor
- 134: Programmmodul
- 136: Programmmodul
- 138: Programmmodul
- 140: Speicher
- 142: Randbedingung
- 144: Kostenparameter
- 146: Datenbank
- 148: Client-Computer
- 150: Prozessor
- 152: Browser-Programm

## Patentansprüche

1. Datenverarbeitungssystem mit
- einer Anlagensteuerung (102) für eine Anlage (104), wobei die Anlagensteuerung zur Erfassung von gemessenen oder durch Berechnung abgeleiteten Prozessgrößen (122) ausgebildet ist,
- einem Anlagenmodell (136) zur Berechnung von simulierten Prozessgrößen (124) unter Verwendung eines Teils der erfassten Prozessgrößen,
- mindestens einer Benutzer-Schnittstelle (116, 118) zur Ausgabe der erfassten Prozessgrößen und der simulierten Prozessgrößen.

2. Datenverarbeitungssystem nach Anspruch 1, mit einer ersten Datenbank (120) zur Speicherung der erfassten Prozessgrößen und einem Computer (130) zur Berechnung der simulierten Prozessgrößen mit dem Anlagenmodell, wobei der Computer zur Abfrage des Teils der erfassten Prozessgrößen aus der ersten Datenbank ausgebildet ist.

3. Datenverarbeitungssystem nach Anspruch 2, wobei der Computer mit der Anlagensteuerung über ein Netzwerk (128) verbunden ist.

4. Datenverarbeitungssystem nach Anspruch 1, 2 oder 3, mit mindestens einer weiteren Benutzer-Schnittstelle (152) zur Eingabe zumindest einer veränderten Prozessgröße zur Berechnung der simulierten Prozessgrößen.

5. Datenverarbeitungssystem nach einem der vorhergehenden Ansprüche, mit mindestens einer weiteren Datenbank (146) zur Speicherung von Kostenparametern (144) zur Verwendung in dem Anlagenmodell.

6. Datenverarbeitungssystem nach einem der vorhergehenden Ansprüche, mit einem Optimierer (138) zur Optimierung der Prozessgrößen, insbesondere der Menge an bereitzustellenden Betriebsstoffen oder an Energie oder der Herstellkosten, unter Verwendung des Anlagenmodells,

7. Datenverarbeitungssystem nach Anspruch 8, mit Mitteln (134) zur Übertragung von optimierten Prozessgrößen an die Anlagensteuerung.

8. Verfahren zur Überwachung einer Anlage (104) mit folgenden Schritten:
- Erfassung von gemessenen oder durch Berechnung abgeleiteten Prozessgrößen (122) der Anlage,
- Verwendung eines Teils der Prozessgrößen zur Berechnung von simulierten Prozessgrößen (124) mit einem Anlagenmodell (136),
- Ausgabe der erfassten Prozessgrößen und der simulierten Prozessgrößen.

9. Verfahren zur Regelung einer Anlage (104) mit folgenden Schritten:
- Erfassung von gemessenen oder durch Berechnung abgeleiteten Prozessgrößen (122) der Anlage,
- Verwendung zumindest eines Teils der erfassten Prozessgrößen zur Berechnung insbesondere der Menge an zuzuführenden Betriebsstoffen oder Energie oder der Herstellkosten,
- Durchführung eines Optimierungsschritts für die Prozessgrößen insbesondere zur Verringerung der Menge an zuzuführenden Betriebsstoffen oder Energie oder der Herstellkosten.

10. Verfahren nach Anspruch 9, wobei die Anlage zur Herstellung von TDI aus TDA unter Verwendung eines Reaktionspartners und von Lösungsmittel ausgebildet ist, wobei der Reaktionspartner unter Energieeinsatz durch Kondensation rezikliert wird und das Lösungsmittel unter Energieeinsatz destilativ rezikliert wird, wobei in die Berechnung der Herstellkosten die Energiekosten und die Kosten des TDA eingehen.

11. Computerprogrammprodukt, insbesondere digitales Speichermedium, zur Durchführung eines Verfahrens nach einem der Ansprüche 8, 9 oder 10.
